# EUROPEAN PATENT SPECIFICATION

(11) **EP 1 967 556 B1**
(45) Date of publication and mention of the grant of the patent: **16.07.2014**
(21) Application number: 06823314.7
(22) Date of filing: 10.11.2006
(51) Int. Cl.: B41M 7/00, C09D 11/10

(54) **ACTIVE ENERGY RAY-CURABLE INK-JET INK**
AKTINISCH HÄRTBARE FARBSTRAHLTINTE
ENCRE POUR JET D ENCRE POLYMERISABLE PAR RAYONNEMENT ACTIF

(30) Priority: 11.11.2005 JP 2005327133; 21.04.2006 JP 2006117695
(43) Date of publication of application: 10.09.2008
(73) Proprietor: Toyo Ink Mfg. Co. Ltd., Tokyo 104-0031 (JP)
(72) Inventor: TAKAHASHI, Yukitoshi, Chuo-ku Tokyo 104-0031 (JP); JONAI, Kazuhiro, Chuo-ku Tokyo 104-0031 (JP); YOSHIHIRO, Yasuo, Chuo-ku Tokyo 104-0031 (JP)
(74) Representative: Koepe, Gerd L.
(86) International application number: PCT/JP2006/322492
(87) International publication number: WO 2007/055332

(56) References cited:
- WO-A1-2005/026270
- JP-A- 2001 311 022
- JP-A- 2004 099 796
- JP-A- 2004 175 906
- JP-A- 2005 154 537
- JP-A- 2005 532 445
- JP-A- 2005 539 390
- JP-A- 2006 131 883
- US-A1- 2003 199 612
- US-A1- 2004 019 128

## Description

### TECHNICAL FIELD

The present invention relates to an active energy beam-curable inkjet ink that exhibits excellent adhesion and flexibility.

### BACKGROUND ART

Conventionally, active energy beam-curable inks have been supplied to, and used in, offset, silk screen and top coat materials, and in recent years, the quantity used of these active energy beam-curable inks used has continued to increase, as such inks enable a simplified drying process that yields reduced costs, and also offer the environmental advantage of enabling a reduction in the volume of volatilized solvents. Of these inks, inkjet inks are widely used in both water-based and solvent-based forms, with the applications of these two forms of ink determined in accordance with their respective properties, but their use in industrial applications faces a variety of problems, including restrictions on the receiving substrate, comparatively poor water resistance, a large quantity of energy required for drying the ink, and adhesion of ink components to the print head upon drying, and as such, replacement of these inks with active energy beam-curable inks of comparatively low volatility has been anticipated.

However, although the cured films generated by conventional active energy beam-curable inks are hard, they are often brittle. Furthermore, although a cured film in which the glass transition temperature has simply been lowered to room temperature or lower exhibits excellent flexibility such as bending, the abrasion resistance and rub resistance deteriorate as a result of a dramatic reduction in the cured film hardness, meaning handling of the film during production is difficult, and the quality of the final product precludes its use. Despite active energy beam-curable inks being viewed as potential replacements, large-scale adoption of such inks has not yet occurred because all active energy beam-cured films are markedly inferior to those produced from conventional solvent-based inks in terms of their stretch properties, in high-level applications that required forming process. Furthermore, these circumstances also apply to current active energy beam-curable inkjet inks, and moreover, the viscosity must be restricted to not more than several tens of cps in order to ensure stable discharge of the inkjet, and monomers must be selected that do not erode the head materials. Accordingly, the monomers that can be added to the ink are severely limited, meaning inks that are able to satisfy a wide variety of requirements are currently not available.

Japanese Patent Laid-Open No. 2004-131725 discloses an inkjet ink containing a reactive oligomer as an example of a flexible inkjet ink. However, because the structural components are mainly polyfunctional monomers and/or oligomers, the cured film is unable to cope with high-level deformation such as stretching of the substrate and tends to develop cracks, meaning the ink is unsuitable for practical application.

Japanese translation of PCT international application No. 2004-518787 discloses an ink composition that comprises a monofunctional or higher polyester urethane oligomer having a polycaprolactone ester component and a hydroxyl component for alleviating the shrinkage that occurs upon curing, and a reactive diluent. This ink exhibits favorable adhesion and flexibility due to the urethane oligomer, and the reactive diluent enables the viscosity to be set within a predetermined range, but the viscosity is high, and the temperature dependency of the viscosity is also comparatively large, meaning the inkjet applicability of the ink remains questionable. Furthermore, because a specific quantity of the oligomer component is added, a low viscosity reactive diluent such as tetrahydrofurfuryl acrylate must be selected, and this creates numerous problems such as erosion of the peripheral members around the head, which causes a shortening of the usable lifespan of the head, and contributes to an increase in costs.

Japanese Patent Laid-Open No. H06-184484 discloses an ultraviolet-curable ink with excellent adhesion to polycarbonate and excellent processability, but this ink uses a polyurethane-based oligomer as an essential component, and therefore has a high viscosity that is completely unsuited to discharge as an inkjet. Furthermore, even if heating is used to lower the viscosity to a dischargeable level, when the ink is discharged, an ink threading phenomenon occurs due to the high molecular weight component of the polyurethane-based oligomer, and this phenomenon causes soiling, which prevents the ink from being used in practical applications. Furthermore, the polycaprolactone-based urethane acrylate synthesized using the method disclosed in Japanese Patent Laid-Open No. H06-184484 is obtained by addition of a hydroxyacrylate to the -NCO groups at both terminals of a prepared urethane, meaning a bifunctional oligomer results. In Japanese Patent Laid-Open No. H06-184484, the flexibility and adhesion provided by the urethane is used to impart post-processing properties to the ink, but because a large quantity of the bifunctional monomer is added, although the product is able to cope with a small amount of stretching, the superior stretch properties disclosed in the present invention are unattainable.

The document WO 2005/026,270 discloses a radiation-curable inkjet ink comprising at least 65 % by weight (based on the total weight of the ink) of one or more monofunctionanl ethylenically unsaturated monomer(s) and also comprises at least one tri-or higher functional ethylenically unsaturated monomer(s) and having a surface tension at 25 °C of not more than 36 dynes/cm.

### DISCLOSURE OF INVENTION

The present invention has an object of providing an active energy beam-curable inkjet ink that is capable of forming a cured ink film that exhibits excellent adhesion and flexibility.

In order to achieve this object, the value of tan δ is controlled to a value specified by the present invention, thereby enabling the provision of an inkjet ink with excellent adhesion and stretch properties. Furthermore, by controlling the glass transition temperature to a value specified by the present invention, abrasion resistance is imparted, and an ink can be provided that is able to satisfactorily withstand processing, and is capable of forming a coating film of favorable hardness as a final product. Moreover, by selecting low molecular weight monomers, the generation of satellite droplets, which commonly occur during discharge, can be suppressed, enabling attractive printed items to be printed over an extended period of time.

The present invention relates to an active energy beam-curable inkjet ink comprising a polymerizable monomer, wherein relative to the total quantity of the polymerizable monomer, the ink comprises from 90 to 99.99% by weight of a monofunctional monomer, and from 0.01 to 10% by weight of a polyfunctional monomer, and wherein from 0.01 to 30% by weight of the polymerizable monomer is N-vinylcaprolactam.

In other words, the present invention relates to an active energy beam-curable inkjet ink comprising a polymerizable monomer, wherein when the cured film obtained upon curing the ink is measured under conditions including an oscillation frequency of 1 Hz, the loss tangent (tan δ) at the glass transition temperature is 2 or greater.

Furthermore, the present invention also relates to the above active energy beam-curable inkjet ink, wherein the degree of erosion of a polycarbonate substrate by the ink is such that when the ink is applied to a polycarbonate substrate and subsequently removed from the substrate one minute later, the arithmetic average roughness (Ra) of the polycarbonate surface is altered by 150 to 300 nm.

Furthermore, the present invention also relates to the above active energy beam-curable inkjet ink, wherein the glass transition temperature of a cured film of the ink is within a range from 25 to 60°C.

Furthermore, the present invention also relates to the above active energy beam-curable inkjet ink, wherein relative to the total quantity of the polymerizable monomer, the ink comprises from 90 to 99.99% by weight of a monofunctional monomer, and from 0.01 to 10% by weight of a polyfunctional monomer.

Furthermore, the present invention also relates to the above active energy beam-curable inkjet ink, wherein from 30 to 99.99% by weight of the polymerizable monomer is phenoxyethyl acrylate, phenoxypolyethylene glycol acrylate, phenoxypolypropylene glycol acrylate, or phenoxypolyethylene-polypropylene glycol acrylate.

Furthermore, the present invention also relates to the above active energy beam-curable inkjet ink, wherein from 0.01 to 30% by weight of the polymerizable monomer is N-vinylcaprolactam.

Furthermore, the present invention also relates to a printed item obtained by printing the above active energy beam-curable inkjet ink onto a printing substrate.

This Application is related to the subject matter disclosed in prior Japanese Applications 2005-327133 filed on November 11, 2005, and 2006-117695 filed on April 21, 2006; the entire contents of which are incorporated by reference herein.

### BEST MODE FOR CARRYING OUT THE INVENTION

In an active energy beam-curable inkjet ink according to the present invention, the inventors discovered that when a cured coating was formed following inkjet discharge onto any of a variety of substrates, controlling the value of tan δ and the Ra value was very important in order to ensure not only favorable adhesion to the substrate, but also favorable stretching of the coating during forming process such as stretch processing, favorable flexibility, and superior adhesion following processing.

In the present invention, by ensuring that the value of the loss tangent (tan δ) at the glass transition temperature is 2 or greater, a coating with a high degree of flexibility can be formed.

In the present invention, the value of tan δ refers to the loss tangent determined by measurement of the dynamic viscoelasticity. Similarly, the value of the glass transition temperature refers to the temperature at the tan δ peak top determined by measurement of the dynamic viscoelasticity. In the present invention, the tan δ peak intensity determined by measurement of the dynamic viscoelasticity is obtained from the measurement results from a viscoelasticity spectrometer DMS6100DMS, manufactured by SII Inc. In the present invention, measurement of the dynamic viscoelasticity and subsequent setting of the numerical ranges was conducted using this measuring apparatus, as it offers superior measurement precision and reproducibility, but the value of tan δ can be calculated by using a typical viscoelasticity measurement device, called "Vibron", in which a direct vibration is imparted to the cured film and the resulting stress response is measured, also and the value of tan δ can be obtained by applying an external stress such as a shear to the measurement target, and determining the shear storage elastic modulus G' as a measurement result, and then calculating the value of tan δ from the shear storage elastic modulus G'. Both tan δ values have different absolute values, but define the same concept.

If tan δ is less than 1, then the cured film loses its flexibility, so that when stretched, the cured film is unable to conform to the deformation, and either cracks or detaches.

A more favorable ink can be provided by setting the value of tan δ at the glass transition temperature to 1.5 or greater in order to achieve a higher level of flexibility, or to a value of 2 or greater in those cases where an even greater degree of flexibility is required. A coating in which the value of tan δ has been set to 10 or greater is very flexible, but may suffer from a deterioration in the degree of hardness, which may be unsuitable for certain applications.

If the glass transition temperature is less than 25°C, then because the coating becomes rubber-like at normal temperatures, and thus the abrasion resistance and rub resistance deteriorate markedly, making practical application impossible. On the other hand, if the glass transition temperature exceeds 60°C, then the hardness of the cured film becomes excessively high, which makes the film brittle and unsuitable for practical application.

The arithmetic average roughness (Ra) described in the present invention refers to the average value of the absolute deviation from an average line positioned between the bottom of the lowest valley and the top of the highest peak on a polycarbonate surface, and is determined by conducting a surface roughness measurement. The Ra value for the polycarbonate surface described within the claims of the present invention refers to a value obtained from the measurement results from a NewView 5300 apparatus (manufactured by ZYGO Corporation) using a scanning white light interference method. The Ra value can also be measured using a contact-type surface roughness meter or an atomic force microscope or the like.

If the Ra value is less than 50, the interaction with the polycarbonate is minimal, and therefore a satisfactory level of adhesion is not obtained, furthermore upon stretching, the cured film is unable to conform to the deformation of the substrate. In contrast, if the Ra value exceeds 300, then the surface of the printed item may become uneven, and clouding may invite a deterioration in the gloss level.

Furthermore, by designing the ink so that the Ra value for the polycarbonate surface following removal of the ink is from 100 to 300 so as to achieve a higher level of adhesion, or is a value from 150 to 300 in those cases where an even higher level of adhesion is required, a more favorable ink can be provided.

In typical active energy beam-curable silk screen printing and the like, because there is a time lag between printing and curing, time is available for the coating to develop a satisfactory interaction with the substrate. In contrast, in inkjet systems, because each dot cures within 150 to 200 µs of striking the substrate, an extremely high level of substrate erosion is necessary.

In an active energy beam-curable inkjet ink, because the absorption spectra for the pigment and the initiator overlap partially, addition of a large quantity of pigment can result in unsatisfactory curing. Accordingly, because the pigment content tends to be lower than normal inks, expression of a high print density requires the formation of a film with a thickness of several tens of µm. With this type of thick cured film, alleviation of stress using tan δ enables the film to conform to simple deformations, but in those cases where a high degree of deformation such as stretching is required, the film tends to detach. In those cases where a thick cured film needs to undergo a high degree of deformation, a two-stage adhesion control process is required, wherein the interface between the ink and the substrate undergoes not only a chemical interaction, but by roughening the substrate surface, also develops a physical anchoring effect, and moreover, the value of tan δ for the upper layer portion of the cured film is also controlled.

In the present invention, the term "curing," describes the process where an ink is applied to a substrate, either via an inkjet or by a coating method using a bar coater or the like, and the applied ink film is subsequently irradiated with an active energy beam such as ultraviolet light, thereby causing the surface of the ink film to lose its tack. Tack can be evaluated by touch. For example, in those cases where a conveyor-type ultraviolet irradiation apparatus is used, a cured film describes a film which, even when passed repeatedly through the apparatus, exhibits no change in tack. Depending on the variety of the ink, the tack may not disappear entirely, leaving some residual tack, but in such cases, if the tack does not change when passed repeatedly through the apparatus, then the film is adjudged to have cured. The curing method and curing conditions are not restricted to those described here.

In the present invention, the polymerizable monomer functions as an active energy beam-curable reaction component, and refers specifically to molecules containing an ethylenic unsaturated double bond.

Examples of the monofunctional polymerizable monomer used in the present invention include cyclohexyl acrylate, tetrahydrofurfuryl acrylate, benzyl acrylate, methylphenoxyethyl acrylate, 4-t-butylcyclohexyl acrylate, caprolactone-modified tetrahydrofurfuryl acrylate, tribromophenyl acrylate, ethoxylated tribromophenyl acrylate, 2-phenoxyethyl acrylate (or phenoxypolyethylene glycol acrylate, phenoxypolypropylene glycol acrylate or phenoxypolyethylene-polypropylene glycol acrylate), acryloylmorpholine, isobornyl acrylate, phenoxydiethylene glycol acrylate, N-vinylcaprolactam, N-vinylpyrrolidone, 2-hydroxy-3-phenoxypropyl acrylate, 1,4-cyclohexanedimethanol monoacrylate, 2-hydroxyethyl acrylate, 2-hydroxypropyl acrylate, 4-hydroxybutyl acrylate, isobutyl acrylate, t-butyl acrylate, isooctyl acrylate, 2-methoxyethyl acrylate, methoxytriethylene glycol acrylate, 2-ethoxyethyl acrylate, 3-methoxybutyl acrylate, ethoxyethoxyethyl acrylate, butoxyethyl acrylate, ethoxydiethylene glycol acrylate, methoxydipropylene glycol acrylate, dipropylene glycol acrylate, β-carboxyethyl acrylate, ethyl diglycol acrylate, trimethylolpropane formal monoacrylate, imide acrylate, isoamyl acrylate, ethoxylated succinic acid acrylate, trifluoroethyl acrylate, ω-carboxypolycaprolactone monoacrylate and N-vinylformamide, although this is not an exhaustive list.

Of these, examples of polymerizable monomers that offer particular suitability to inkjet printing include cyclohexyl acrylate, methylphenoxyethyl acrylate, 2-phenoxyethyl acrylate (or phenoxypolyethylene glycol acrylate, phenoxypolypropylene glycol acrylate or phenoxypolyethylene-polypropylene glycol acrylate), acryloylmorpholine, isobornyl acrylate, N-vinylcaprolactam, N-vinylpyrrolidone, 2-hydroxy-3-phenoxypropyl acrylate and 1,4-cyclohexanedimethanol monoacrylate.

Furthermore, from the viewpoints of safety and performance of the coating, the use of methylphenoxyethyl acrylate, 2-phenoxyethyl acrylate (or phenoxypolyethylene glycol acrylate, phenoxypolypropylene glycol acrylate or phenoxypolyethylene-polypropylene glycol acrylate), acryloylmorpholine, isobornyl acrylate, N-vinylcaprolactam, 2-hydroxy-3-phenoxypropyl acrylate and 1,4-cyclohexanedimethanol monoacrylate is particularly preferred.

Furthermore, specific examples of the polyfunctional polymerizable monomer include dimethyloltricyclodecane diacrylate, propoxylated bisphenol A di(meth)acrylate, ethoxylated bisphenol A di(meth)acrylate, cyclohexanedimethanol di(meth)acrylate, dimethyloldicyclopentane diacrylate, ethoxylated isocyanuric acid triacrylate, tri(2-hydroxyethyl isocyanurate) triacrylate, tri(meth)allyl isocyanurate, ethylene glycol di(meth)acrylate, diethylene glycol di(meth)acrylate, polyethylene glycol di(meth)acrylate, 1,6-hexanediol di(meth)acrylate, ethoxylated 1,6-hexanediol diacrylate, neopentyl glycol di(meth)acrylate, polypropylene glycol diacrylate, 1,4-butanediol di(meth)acrylate, 1,9-nonanediol diacrylate, tetraethylene glycol diacrylate, 2-n-butyl-2-ethyl-1,3-propanediol diacrylate, hydroxypivalic acid neopentyl glycol diacrylate, 1,3-butylene glycol di(meth)acrylate, trimethylolpropane triacrylate, hydroxypivalic acid trimethylolpropane triacrylate, ethoxylated phosphoric acid triacrylate, ethoxylated tripropylene glycol diacrylate, neopentyl glycol-modified trimethylolpropane diacrylate, stearic acid-modified pentaerythritol diacrylate, pentaerythritol triacrylate, tetramethylolpropane triacrylate, tetramethylolmethane triacrylate, pentaerythritol tetraacrylate, caprolactone-modified trimethylolpropane triacrylate, propoxylated glyceryl triacrylate, tetramethylolmethane tetraacrylate, pentaerythritol tetraacrylate, ditrimethylolpropane tetraacrylate, ethoxylated pentaerythritol tetraacrylate, dipentaerythritol hexaacrylate, caprolactone-modified dipentaerythritol hexaacrylate, dipentaerythritol hydroxypentaacrylate, neopentyl glycol oligoacrylate, 1,4-butanediol oligoacrylate, 1,6-hexanediol oligoacrylate, trimethylolpropane oligoacrylate, pentaerythritol oligoacrylate, ethoxylated neopentyl glycol di(meth)acrylate, propoxylated neopentyl glycol di(meth)acrylate, tripropylene glycol di(meth)acrylate, ethoxylated trimethylolpropane triacrylate and propoxylated trimethylolpropane triacrylate, although this is not an exhaustive list.

Of these, examples of polymerizable monomers that offer particular suitability to inkjet printing include dimethyloltricyclodecane diacrylate, propoxylated bisphenol A di(meth)acrylate and ethoxylated bisphenol A di(meth)acrylate. These monofunctional and polyfunctional monomers may be used either alone, or if required, in combinations of two or more different monomers.

Examples of polymerizable monomers that are able to erode the surface of the polycarbonate and cause a large variation in the Ra value include phenoxyethyl acrylate (or phenoxypolyethylene glycol acrylate, phenoxypolypropylene glycol acrylate or phenoxypolyethylene-polypropylene glycol acrylate), N-vinylcaprolactam, tetrahydrofurfuryl acrylate, ethoxyethoxyethyl acrylate and 1,6-hexanediol di(meth)acrylate.

Of these, in terms of improving the adhesion, the use of phenoxyethyl acrylate (or phenoxypolyethylene glycol acrylate, phenoxypolypropylene glycol acrylate or phenoxypolyethylene-polypropylene glycol acrylate) and N-vinylcaprolactam is particularly preferred.

In those cases where the ratio of polymerizable monomers within the ink is such that the phenoxyethyl acrylate (or phenoxypolyethylene glycol acrylate, phenoxypolypropylene glycol acrylate or phenoxypolyethylene-polypropylene glycol acrylate) represents less than 30% by weight, or in those cases where the ink comprises no N-vinylcaprolactam, the erosion of the polycarbonate by the ink weakens considerably, resulting in a smaller interaction and poorer adhesion. In contrast, in those cases where the phenoxyethyl acrylate (or phenoxypolyethylene glycol acrylate, phenoxypolypropylene glycol acrylate or phenoxypolyethylene-polypropylene glycol acrylate) represents 100% by weight, or those cases where the N-vinylcaprolactam represents more than 30% by weight, the surface of the printed item may become uneven, and clouding may invite a deterioration in the gloss level.

In accordance with the invention, the respective ratios for the polymerizable monomers are from 90 to 99.99% by weight for the monofunctional monomer, and from 0.01 to 10% by weight for the polyfunctional monomer.

If the ink comprises less than 80% by weight of the monofunctional monomer and more than 20% by weight of the polyfunctional monomer, then the shrinkage upon curing is large, and the adhesion tends to deteriorate. Furthermore, in some cases, large quantities of residual stress may develop within the coating, causing wrinkles and cracks.

The ink described in the present invention refers to a liquid that is printed or coated onto a substrate surface.

In those cases where this ink contains no coloring components, the ink can be used in coating applications. Both single-layer coating, and layered coating that is performed together with an ink that comprises the type of coloring component described below can be conducted. Furthermore, in order to impart the cured film with superior hardness, durability such as abrasion resistance, molding properties, or design features such as a controlled level of luster, various fillers or resin components may also be added to the ink. Examples of fillers include extender pigments such as calcium carbonate, barium sulfate, spherical silica and hollow silica, as well as resin beads and the like. There are no particular restrictions on the resin components, provided the resin is inactive upon irradiation with the active energy beam, and examples of suitable resins include polyurethane resins, vinyl chloride-based resins (such as polyvinyl chloride resins and vinyl chloride-vinyl acetate copolymers), ethylene-vinyl acetate copolymers, polyester resins, poly(meth)acrylate resins, polyketone resins, polyvinyl-based resins (such as polyvinylacetal resins, polyvinylbutyral resins and polyvinylpyrrolidone resins), and cellulose-based resins (such as CAB resins and CAP resins). In those cases where these types of fillers or resin components are added, the types of materials added and the blend quantities are preferably determined with due consideration of the resulting inkjet suitability. When the ink is used for a coating application, other printing methods such as silk screen printing, gravure printing or offset printing, or other coating methods such as spray coating may also be used. In the case of a layered coating process performed together with an ink that comprises a coloring component, a coating material other than the ink of the present invention that is used in typical printing applications such as silk screen printing, gravure printing or offset printing may be layered on top of an ink layer comprising a colorant of the present invention, a separately molded coating layer (such as a film) may be transferred by lamination, or layering may be conducted using a spray coating material.

On the other hand, in those cases where the ink of the present invention comprises a coloring component, the ink can be used as a material for displaying graphics, lettering or photographs or the like. Conventionally, dyes or pigments are the most widely used coloring components, and for reasons of weather resistance in particular, pigments are the more widely used. Examples of pigments that can be used include achromatic pigments such as carbon blacks, titanium oxide and calcium carbonate, and chromatic organic pigments.

Specific examples of carbon blacks include "Special Black 350, 250, 100, 550, 5, 4, 4A and 6", and "Printex U, V, 140U, 140V, 95, 90, 85, 80, 75, 55, 45, 40, P, 60, L6, L, 300, 30, 3, 35, 25, A and G", all manufactured by Degussa AG, "REGAL 400R, 660R, 330R and 250R", and "MOGUL E and L", all manufactured by Cabot Corporation, and "MA 7, 8, 11, 77, 100, 100R, 100S, 220 and 230", and "#2700, #2650, #2600, #200, #2350, #2300, #2200, #1000, #990, #980, #970, #960, #950, #900, #850, #750, #650, #52, #50, #47, #45, #45L, #44, #40, #33, #332, #30, #25, #20, #10, #5, CF9, #95 and #260", all manufactured by Mitsubishi Chemical Corporation.

Specific examples of organic pigments include insoluble azo pigments such as toluidine red, toluidine maroon, Hansa yellow, benzidine yellow and pyrazolone red, soluble azo pigments such as lithol red, helio bordeaux, pigment scarlet and permanent red 2B, derivatives of vat dyes such as alizarine, indanthrone and thioindigo maroon, phthalocyanine-based organic pigments such as phthalocyanine blue and phthalocyanine green, quinacridone-based organic pigments such a quinacridone red and quinacridone magenta, perylene-based organic pigments such as perylene red and perylene scarlet, isoindolinone-based organic pigments such as isoindolinone yellow and isoindolinone orange, pyranthrone-based organic pigments such as pyranthrone red and pyranthrone orange, thioindigo-based organic pigments, condensed azo-based organic pigments, benzimidazolone-based organic pigments, quinophthalone-based organic pigments such as quinophthalone yellow, isoindoline-based organic pigments such as isoindoline yellow, and other pigments such as flavanthrone yellow, acylamide yellow, nickel azo yellow, copper azo methine yellow, perinone orange, anthrone orange, dianthraquinonyl red, and dioxazine violet.

Examples of organic pigments expressed using their color index (C.I.) numbers include C.I. pigment yellow 12, 13, 14, 17, 20, 24, 74, 83, 86, 93, 109, 110, 117, 125, 128, 129, 137, 138, 139, 147, 148, 150, 151, 153, 154, 155, 166, 168, 180 and 185, C.I. pigment orange 16, 36, 43, 51, 55, 59 and 61, C.I. pigment red 9, 48, 49, 52, 53, 57, 97, 122, 123, 149, 168, 177, 180, 192, 202, 206, 215, 216, 217, 220, 223, 224, 226, 227, 228, 238 and 240, C.I. pigment violet 19, 23, 29, 30, 37, 40 and 50, C.I. pigment blue 15, 15:1, 15:3, 15:4, 15:6, 22, 60 and 64, C.I. pigment green 7 and 36, and C.I. pigment brown 23, 25 and 26. Of the above pigments, quinacridone-based organic pigments, phthalocyanine-based organic pigments, benzimidazolone-based organic pigments, isoindolinone-based organic pigments, condensed azo-based organic pigments, quinophthalone-based organic pigments and isoindoline-based organic pigments and the like exhibit superior light resistance, and are therefore preferred.

In the case of other colors such as white, the types of pigments employed in the inks for typical printing applications or coating material applications can be used, and these may be selected as required in accordance with factors such as their coloring properties and light resistance.

The proportion of the pigment relative to the total weight of the ink, is preferably within a range from 0.2 to 15 parts by weight of a yellow, magenta, cyan or black organic pigment per 100 parts by weight of the ink, or in the case of white titanium oxide, is preferably within a range from 5 to 40 parts by weight per 100 parts by weight of the ink.

Furthermore, a pigment dispersant is preferably added to the ink of the present invention in order to improve the dispersibility of the filler and pigment, and improve the storage stability of the ink. Examples of pigment dispersants that can be used include hydroxyl group-containing carboxylate esters, salts of long-chain polyaminoamides and esters of high molecular weight acids, salts of high molecular weight polycarboxylic acids, esters of high molecular weight unsaturated acids, high molecular weight copolymers, modified polyurethanes, modified polyacrylates, polyetherester-based anionic surfactants, salts of naphthalenesulfonic acid-formalin condensation products, salts of aromatic sulfonic acid-formalin condensation products, polyoxyethylene alkyl phosphate esters, polyoxyethylene nonylphenyl ether, and stearylamine acetate.

Specific examples of dispersants include products manufactured by BYK Chemie, such as "Anti-Terra-U (a polyaminoamide phosphate)", "Anti-Terra-203/204 (salts of high molecular weight polycarboxylic acids)", "Disperbyk-101 (a phosphate salt of a polyaminoamide and an acid ester), 107 (a hydroxyl group-containing carboxylate ester), 110 and 111 (copolymers that contain acid groups), 130 (a polyamide), 161, 162, 163, 164, 165, 166 and 170 (high molecular weight copolymers)", "400", "Bykumen (an ester of a high molecular weight unsaturated acid)", "BYK-P104, P105 (high molecular weight unsaturated polycarboxylic acids", "P104S, 240S (systems containing a high molecular weight unsaturated polycarboxylic acid and silicon)", and "Lactimon (a combination of a long-chain amine, an unsaturated polycarboxylic acid, and silicon)".

Furthermore, products manufactured by Efka Chemicals include "Efka 44, 46, 47, 48, 49, 54, 63, 64, 65, 66, 71, 701, 764 and 766", "Efka Polymer 100 (a modified polyacrylate), 150 (an aliphatic modified polymer), 400, 401, 402, 403, 450, 451, 452 and 453 (modified polyacrylates), and 745 (a copper phthalocyanine system)"; products manufactured by Kyoeisha Chemical Co., Ltd., include "Florene TG-710 (a urethane oligomer)", "Flonone SH-290 and SP-1000", and "Polyflow No. 50E and No. 300 (acrylic copolymers)"; and products manufactured by Kusumoto Chemicals Ltd. include "Disparlon KS-860, 873SN and 874 (high molecular weight dispersants), #2150 (an aliphatic polyvalent carboxylic acid), and #7004 (a polyether ester)".

Moreover, products manufactured by Kao Corporation include "Demol RN and N (sodium salts of naphthalenesulfonic acid-formalin condensates), MS, C and SN-B (sodium salts of aromatic sulfonic acid-formalin condensates), and EP", "Homogenol L-18 (a polycarboxylic acid type polymer)", "Emulgen 920, 930, 931, 935, 950 and 985 (polyoxyethylene nonylphenyl ethers)", and "Acetamine 24 (a coconut amine acetate) and 86 (stearylamine acetate)"; products manufactured by Avecia Ltd. include "Solsperse 5000 (a phthalocyanine ammonium salt system), 13940 (a polyesteramine system), 17000 (a fatty acid amine system), and 24000, 32000, 39000 and 41000"; products manufactured by Nikko Chemicals Co., Ltd. include "Nikol T106 (a polyoxyethylene sorbitan monooleate) and MYS-IEX (a polyoxyethylene monostearate), and Hexagline 4-0 (a hexaglyceryl tetraoleate)".

The quantity of the dispersant within the ink is preferably within a range from 0.1 to 10% by weight.

Various other additives may also be used within the active energy beam-curable inkjet ink of the present invention, including plasticizers, surface modifiers, ultraviolet light inhibitors, light stabilizers, and antioxidants.

Examples of surface conditioners that can be used in the present invention include polyether-modified polydimethylsiloxanes, polyester-modified polydimethylsiloxanes, aralkyl-modified polymethylalkylsiloxanes, polyester-modified methylalkylsiloxanes, polyether-modified polymethylalkylsiloxanes, polyether-modified siloxanes, acrylic copolymers, fluorine-modified polymers, silicon-modified polyacrylic polymers, and silicon-modified acrylates.

Specific examples of surface conditioners include products manufactured by BYK Chemie, such as "BYK-302, 306, 307, 330, 331, 333, 337, 344, UV3500 and UV3510 (polyether-modified polydimethylsiloxanes)", "BYK-310, 370 and UV3570 (polyester-modified polydimethylsiloxanes)", "BYK-315 (a polyester-modified methylalkylsiloxane)", "BYK-320 and 325 (polyether-modified polymethylalkylsiloxanes)", and "BYK-352, 354, 355, 358N, 361N, 357 and 392 (acrylic copolymers)"; and products manufactured by TEGO Chemie such as "TEGO-RAD 2100, 2200N and 2250 (silicon-modified acrylates)".

In the present invention, in those cases where ultraviolet radiation is used as the active energy beam, a photoradical polymerization initiator is also added to the ink. Molecular cleavage initiators or hydrogen abstraction initiators are particularly suitable as the photopolymerization initiator in the present invention. Specific examples of preferred initiators include benzoin isobutyl ether, 2,4-diethylthioxanthone, 2-isopropylthioxanthone, benzil, 2,4,6-trimethylbenzoyldiphenylphosphine oxide, 2-benzyl-2-dimethylamino-1-(4-morpholinophenyl)-butan-1-one, and bis(2,6-dimethoxybenzoyl)-2,4,4-trimethylpentylphosphine oxide, examples of other molecular cleavage initiators that may be used in combination with the above photopolymerization initiators include 1-hydroxycyclohexyl phenyl ketone, benzoin ethyl ether, benzyl dimethyl ketal, 2-hydroxy-2-methyl-1-phenylpropan-1-one, 1-(4-isopropylphenyl)-2-hydroxy-2-methylpropan-1-one and 2-methyl-1-(4-methylthiophenyl)-2-morpholinopropan-1-one, and examples of other hydrogen abstraction initiators that may be used in combination with the above initiators include benzophenone, 4-phenylbenzophenone, isophthalphenone and 4-benzoyl-4'-methyl-diphenylsulfide.

With the above photoradical polymerization initiator, an amine that does not undergo an addition reaction with the above polymerizable components may also be added as a sensitizer, and examples of this amine include trimethylamine, methyldimethanolamine, triethanolamine, p-diethylaminoacetophenone, ethyl p-dimethylaminobenzoate, isoamyl p-dimethylaminobenzoate, N,N-dimethylbenzylamine, and 4,4'-bis(diethylamino)benzophenone. The photoradical polymerization initiator and the sensitizer described above are, of course, preferably selected from those materials that exhibit excellent solubility within the ultraviolet-curable compounds, and do not inhibit the transmittance of ultraviolet light.

In an inkjet system, because the image is drawn using dots, if the ink does not cure within a very short time of striking the substrate, then the dots will spread, causing bleeding of the image. Accordingly, an ink for an active energy beam-curable inkjet system must exhibit rapid curing. In order to achieve such rapid curing, the initiator uses two different materials, one with a maximum absorption wavelength at the long wavelength side of the spectrum, and the other at the short wavelength side, or may also use an even greater number of materials. By using a plurality of different initiators, the energy emitted by the radiation source can be utilized more efficiently, meaning the curability of the ink can be improved.

A polymerization inhibitor such as hydroquinone, p-methoxyphenol, t-butylcatechol, pyrogallol or butylhydroxytoluene is preferably added to the inkjet ink of the present invention in a quantity within a range from 0.01 to 5% by weight in order to enhance the stability of the ink over time, and improve the stability of the ink within a recording apparatus.

The inkjet ink of the present invention is produced by using a typical dispersion device such as a sand mill to thoroughly disperse the polymerizable monomer, the pigment dispersant and the pigment. A concentrated liquid with a high pigment concentration is preferably prepared in advance, and this concentrated liquid is then diluted with the polymerizable monomer. Satisfactory dispersion can be achieved using typical dispersion devices, and because excessive dispersion energy is not needed, and an excessively long period of time is not required for achieving dispersion, degradation of the ink components during dispersion is unlikely, enabling preparation of an ink with excellent stability. The ink is preferably filtered through a filter with a pore size of 3 µm or less, and preferably 1 µm or less.

The inkjet ink of the present invention is preferably prepared with a relatively high viscosity at 25°C of 5 to 50 mPa·s. An ink with a viscosity at 25°C of 5 to 50 mPa·s exhibits stable discharge properties for heads with a normal frequency of 4 to 10 kHz, and for heads with a high frequency of 10 to 50 kHz.

If the viscosity is less than 5 mPa·s, then the ability of the ink to conform to the discharge tends to deteriorate for a high frequency head, whereas if the viscosity exceeds 50 mPa·s, then even if a mechanism for lowering the viscosity by heating is incorporated within the head, the discharge itself deteriorates, the stability of the discharge worsens, and discharge may become completely impossible.

Furthermore, the inkjet ink of the present invention preferably has an electrical conductivity of not more than 10 µs/cm in a piezo head, and preferably causes no electrical corrosion within the interior of the head. Furthermore, in a continuous system, the conductivity may need to be adjusted using an electrolyte, and in such cases, the conductivity may need to be altered to 0.5 ms/cm or higher.

In order to use the inkjet ink of the present invention, the inkjet ink is first supplied to the print head of an inkjet recording printer, the ink is then discharged from the print head onto a substrate, and an active energy beam such as ultraviolet light or an electron beam is then irradiated onto the ink. This ensures rapid curing of the composition on the printing medium.

There are no particular restrictions on the printing substrate, and examples include plastic substrates such as polycarbonate, hard polyvinyl chloride, soft polyvinyl chloride, polystyrene, foamed styrol, PMMA, polypropylene, polyethylene and PET, mixtures or modified products of these plastics, as well as glass, metal substrates such as stainless steel, and wood.

Furthermore, in those cases where processing is conducted following printing onto the substrate, the processing conditions such as the processing temperature may be set as required.

Examples of active energy beam sources that can be used in those cases where ultraviolet irradiation is used include a high-pressure mercury lamp, metal halide lamp, low-pressure mercury lamp, ultra high-pressure mercury lamp, ultraviolet laser, and sunlight. Furthermore, if an electron beam is used as the active energy beam, then an electron beam-curable ink can be prepared by removing the aforementioned initiator and sensitizer from the ink formulation.

The ink of the present invention can be used within an ink set that comprises a plurality of inks, such as 4, 5, 6 or 7 inks, each containing a different pigment. Examples of 4-color ink sets include yellow, magenta, cyan and black sets, and yellow, magenta, cyan and white sets.

By controlling the tan δ value and the Ra value for an active energy beam-curable inkjet ink, an active energy beam-curable inkjet ink with excellent adhesion and flexibility was able to be provided. Specific applications of this inkjet ink include printing applications that require some form of deformation processing following inkjet printing. By using the present invention, no cracking occurs during the deformation processing, allowing printed items to be processed into shapes that have until now been impossible.

### EXAMPLES

As follows is a description of specifics of the present invention, based on a series of examples, although the present invention is in no way limited by these examples. In the examples, "parts" refers to "parts by weight".

First, a pigment dispersion A was prepared with the formulation shown below. The dispersion was prepared by adding the pigment and the dispersant to the monomer, conducting mixing with a high-speed mixer or the like until a uniform mixture was obtained, and then dispersing the thus obtained mill base in a horizontal sand mill for approximately one hour.
- LIONOL BLUE FG-7400G (a phthalocyanine pigment, manufactured by Toyo Ink Mfg. Co., Ltd.): 30 parts
- SOLSPERSE 32000 (a pigment dispersant, manufactured by The Lubrizol Corporation): 9 parts
- Phenoxyethyl acrylate: 61 parts

Furthermore, a pigment dispersion B was prepared with the formulation shown below. The dispersion was prepared using the same production method as that employed for the dispersion A.
- Novoperm Yellow P-HG (a benzimidazolone pigment, manufactured by Clariant Ltd.): 35 parts
- SOLSPERSE 24000 (a pigment dispersant, manufactured by The Lubrizol Corporation): 7 parts
- Phenoxyethyl acrylate: 58 parts

Furthermore, a pigment dispersion C was prepared with the formulation shown below. The dispersion was prepared using the same production method as that employed for the dispersion A.
- Hostaperm Red E5B02 (a quinacridone pigment, manufactured by Clariant Ltd.): 20 parts
- SOLSPERSE 24000 (a pigment dispersant, manufactured by The Lubrizol Corporation): 6 parts
- Phenoxyethyl acrylate: 74 parts

Furthermore, a pigment dispersion D was prepared with the formulation shown below. The dispersion was prepared using the same production method as that employed for the dispersion A.
- Special Black 350 (a carbon black pigment, manufactured by Degussa AG): 30 parts
- SOLSPERSE 32000 (a pigment dispersant, manufactured by The Lubrizol Corporation): 6 parts
- Phenoxyethyl acrylate: 64 parts

Furthermore, a pigment dispersion E was prepared with the formulation shown below. The dispersion was prepared using the same production method as that employed for the dispersion A.
- TIPAQUE PF740 (a white pigment, silica treatment: 1.0%, alumina treatment 2.0%, manufactured by Ishihara Sangyo Kaisha, Ltd.): 40 parts
- AJISPER PB821 (a pigment dispersant, manufactured by Ajinomoto-Fine-Techno Co., Inc.): 2 parts
- Phenoxyethyl acrylate: 58 parts

### Example 1

The raw materials shown in Table 1 were mixed together, with the materials added in sequence from the top material in the table downwards. Following mixing for two hours, the mixture was checked to confirm that no undissolved material remained, and the mixture was then filtered through a membrane filter, thereby removing any coarse particles capable of causing head blockages, and completing preparation of the ink. Using an inkjet discharge apparatus, the ink was discharged onto a polyethylene sheet. Immediately following discharge, the ink was cured by ultraviolet irradiation using an ultraviolet irradiation apparatus manufactured by Harrison Toshiba Lighting Co., Ltd. (120 W/cm, one high-pressure mercury lamp, conveyor speed: 5 m/min., irradiation distance: 10 cm, 1 pass), thus forming a coating. After standing for 24 hours, the coating was peeled gently away from the polyethylene sheet, and a dynamic viscoelasticity measurement was conducted. Furthermore, in order to measure the Ra value, the ink was discharged onto a polycarbonate sheet, and one minute after discharge, the polycarbonate sheet was washed with isopropyl alcohol to remove the ink. Moreover, in order to assess the adhesion and flexibility, the ink was also discharged onto a polycarbonate sheet so as to form a film thickness of 10 µm, and the ink was then cured to form a coating.

### Example 2 to Example 5

Using the same method as the example 1, inks were prepared using the formulations shown in Table 1, and subsequently printed and cured.

### Comparative Examples 1 to 5

Using the same method as the example 1, inks were prepared using the formulations shown in Table 2, and subsequently printed and cured.

### Evaluation Methods

The prepared coating on polyethylene was left to stand for 24 hours and was then cut precisely to a width of 5 mm and a length of 30 mm, and the coating was then peeled gently away from the polyethylene, and then attached to, and measured using, a DMS6100 apparatus (manufactured by SII Inc.) The measurement conditions included a measurement amplitude of 1 Hz, a heating rate of 2°C/min., and a temperature range from -30 to 180°C. The peak top temperature for tan δ was determined from the resulting profile and used as the glass transition temperature. Furthermore, the value of tan δ at the glass transition temperature was read off the profile.

The polycarbonate sheet from which the ink had been removed was dried thoroughly, the surface of the sheet was then inspected using a NewView 5300 apparatus (manufactured by ZYGO Corporation), and the arithmetic average roughness Ra was determined.

The coating on the polycarbonate sheet was punched out into a dumbbell shape, together with the substrate, using a punching cutter (manufactured by Dumbbell Co., Ltd.), and the resulting test piece was then heated to 170°C and subjected to a tensile test with the substrate still attached, at a strain rate of 2/min., using a Tensilon (UCT-1T, manufactured by ORIENTEC Co., Ltd.). Because ascertaining the fracture point of the coating based on the tension variation obtained from the load cell was difficult, the stretch ratio was reported as the percentage value at the point where the surface of the coating was visually confirmed to have fractured.

The degree of adhesion to the substrate was determined by cross-cutting the cured coating at 1 mm intervals to form a grid of 100 squares, bonding a cellophane tape to the squares, and following rubbing of the surface of the cellophane tape with an eraser to ensure that the coating had bonded satisfactorily to the cellophane tape, peeling the cellophane tape off at an angle of 90° and determining the degree of adhesion of the coating to the substrate. The evaluation criteria were as shown below.
O: absolutely no peeling of the 100 squares was observed
OΔ: although all 100 squares remained attached, some peeling of the coating surface, or some damage to edges of the squares was visible
Δ: from 1 to 50 of the 100 squares were peeled off
ΔX: from 51 to 99 of the 100 squares were peeled off
X: all 100 squares were peeled off

The blend formulations and evaluation results for each of the inks are shown in Table 1 and Table 2.

In the examples 1 to 5, the value of tan δ was controlled at a value of 2 or greater, and as a result, the stretch ratio exceeded 100% for all of the inks, and excellent results were also achieved for the adhesion. This is because the high tan δ value alleviates the stress that occurs upon stretching, meaning the ability of the cured film to conform to substrate deformation improves, thereby yielding a superior level of stretchability that is unattainable using conventional active energy beam-curable ink technology.

In the comparative examples 1 to 5, because the value of tan δ was 1 or less, the stress that occurred upon stretching could not be alleviated, meaning the cured film fractured, the stretch ratio was very low at 20% or lower, and the adhesion was also poor. In such cases, cracking or fracture occurs, leading to defective products, not only during processing such as stretching that requires a large degree of deformation, but also during processing such as punching or bending processes that required comparatively little deformation. In the comparative examples 2, 4 and 5, even though the value of Ra was high, indicating a favorable physical anchoring effect, because the value of tan δ was 1 or less, the adhesion was poor.

Furthermore, a printed item prepared by conducting printing using the ink described in the example 2, and subsequently forming a layered coating thereon using the ink of the example 5 exhibited a stretchability of 182%, indicating a very satisfactory level of performance. Moreover, even if the ink of the example 2 is substituted with one of the inks of the examples 1 through 3, and the ink of the example 4 is substituted with the ink of the example 5, a high stretchability of at least 40% is still obtained.

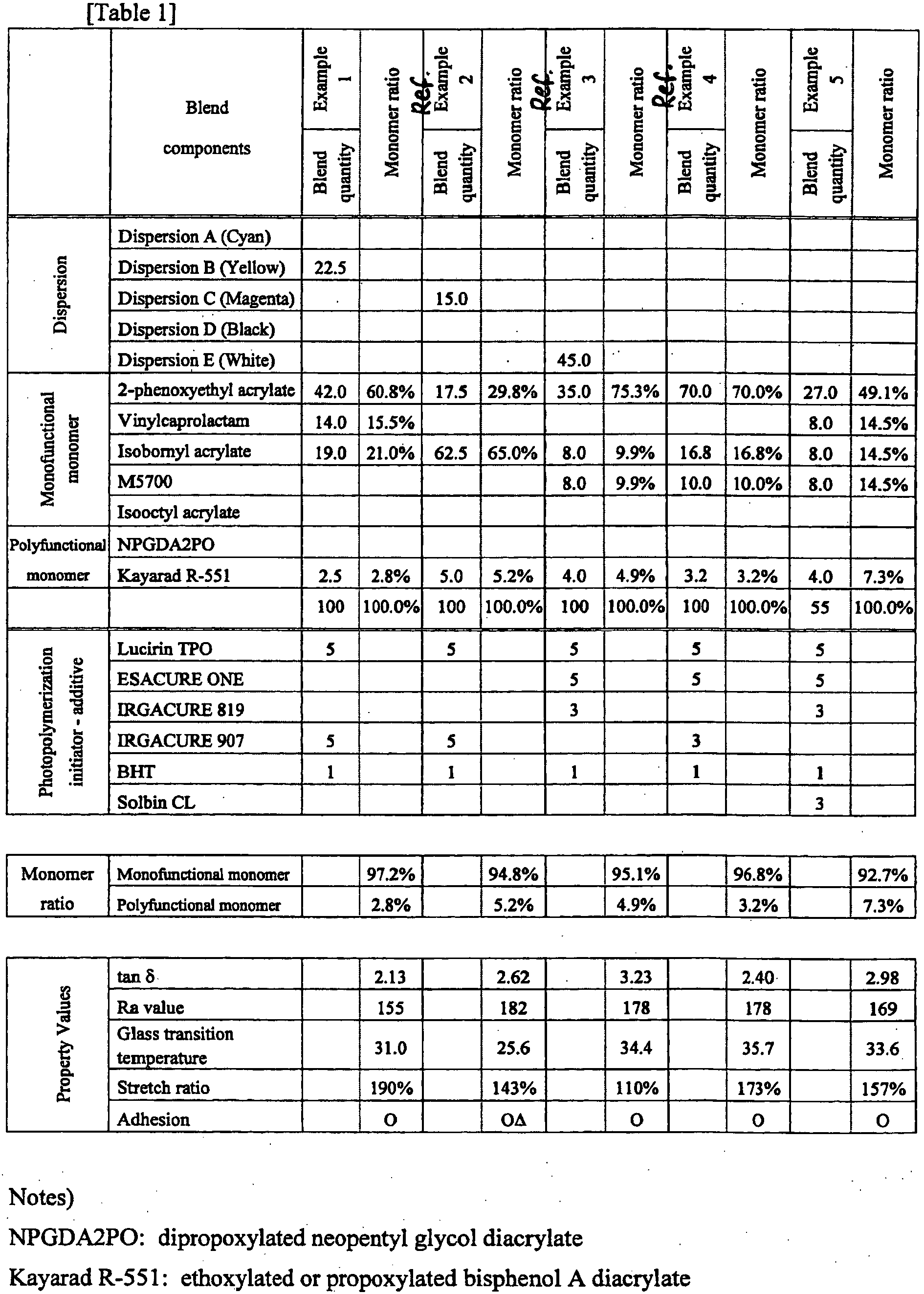

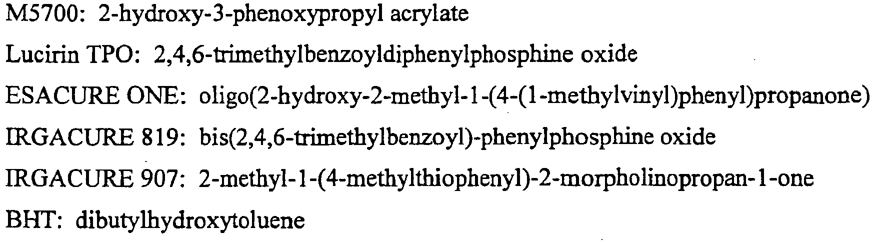

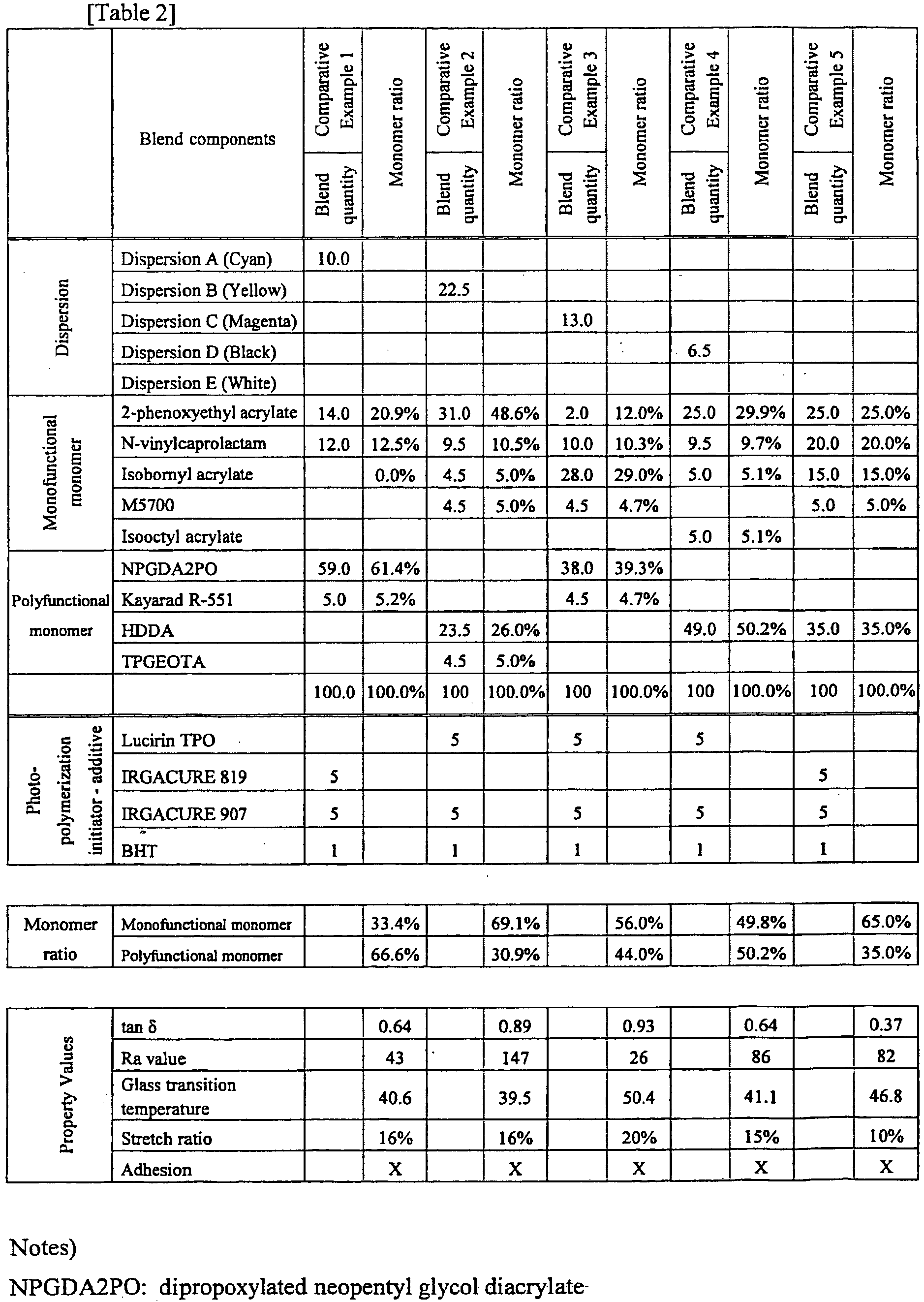

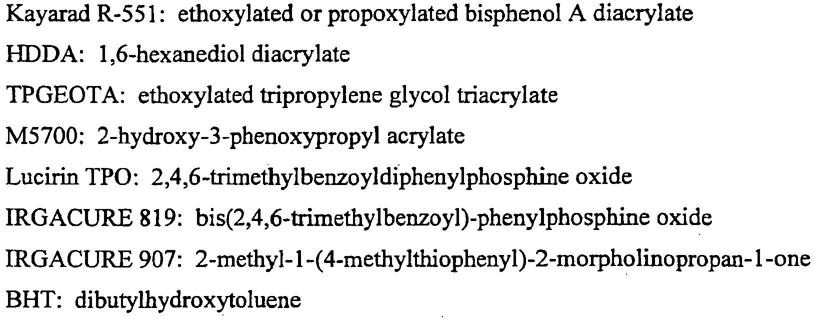

## Claims

1. An active energy beam-curable inkjet ink comprising a polymerizable monomer, wherein relative to the total quantity of the polymerizable monomer, the ink comprises from 90 to 99.99% by weight of a monofunctional monomer, and from 0.01 to 10% by weight of a polyfunctional monomer, and wherein from 0.01 to 30% by weight of the polymerizable monomer is N-vinylcaprolactam.

2. The active energy beam-curable inkjet ink according to claim 1, wherein from 30 to 99.99% by weight of the polymerizable monomer is phenoxyethyl acrylate, phenoxypolyethylene glycol acrylate, phenoxypolypropylene glycol acrylate, or phenoxypolyethylene-polypropylene glycol acrylate.

3. A printed item obtained by printing the active energy beam-curable inkjet ink according to any one of claims 1 and 2 onto a printing substrate.

## Patentansprüche

1. Mit aktivem Energiestrahl härtbare Tintenstrahl-Tinte, umfassend ein polymerisierbares Monomer, worin, bezogen auf die Gesamtmenge des polymerisierbaren Monomers, die Tinte von 90 bis 99,99 Gew.-% eines monofunktionellen Monomers und von 0,01 bis 10 Gew.-% eines polyfunktionellen Monomers umfaßt, und worin von 0,01 bis 30 Gew.-% des polymerisierbaren Monomers N-Vinylcaprolactam sind.

2. Mit aktivem Energiestrahl härtbare Tintenstrahl-Tinte nach Anspruch 1, worin von 30 bis 99,99 Gew.-% des polymerisierbaren Monomers Phenoxyethylacrylat, Phenoxypolyethylenglykolacrylat, Phenoxypolypropylenglykolacrylat oder Phenoxypolyethylen-polypropylenglykolacrylat sind.

3. Bedruckter Gegenstand, erhältlich durch Drucken der mit aktivem Energiestrahl härtbaren Tintenstrahl-Tinte nach irgendeinem der Ansprüche 1 und 2 auf ein Drucksubstrat.

## Revendications

1. Encre pour jet d'encre durcissable par un rayonnement énergétique actif, comprenant un monomère polymérisable, l'encre comprenant, par rapport à la quantité totale du monomère polymérisable, 90 à 99,99% en poids d'un monomère monofonctionnel et 0,01 à 10% en poids d'un monomère polyfonctionnel et 0,01 à 30% en poids du monomère polymérisable étant du N-vinylcaprolactame.

2. Encre pour jet d'encre durcissable par un rayonnement énergétique actif selon la revendication 1, 30 à 99,99% en poids du monomère polymérisable étant de l'acrylate de phénoxyéthyle, de l'acrylate de phénoxypolyéthylèneglycol, de l'acrylate de phénoxypolypropylèneglycol ou de l'acrylate de phénoxypolyéthylènepolypropylèneglycol.

3. Objet imprimé obtenu par impression de l'encre pour jet d'encre durcissable par un rayonnement énergétique actif selon l'une quelconque des revendications 1 et 2 sur un substrat d'impression.
